Europäisches Patentamt

European Patent Office

Office européen des brevets

(11) Publication number: **0 220 353**
A1

# EUROPEAN PATENT APPLICATION

(21) Application number: 85402036.9

(22) Date of filing: 21.10.85

(51) Int. Cl.4: **A23L 2/02** , A23L 2/38

(43) Date of publication of application:
06.05.87 Bulletin 87/19

(84) Designated Contracting States:
AT CH DE FR GB IT LI NL

(71) Applicant: **Nishiyama, Eiichi**
**No. 25-1, 5-chome, Honcho**
**Koganei-shi Tokyo(JP)**

(72) Inventor: **Nishiyama, Eiichi**
**No. 25-1, 5-chome, Honcho**
**Koganei-shi Tokyo(JP)**

(74) Representative: **Rodhain, Claude**
**Cabinet Claude Rodhain 30, rue la Boétie**
**F-75008 Paris(FR)**

(54) Refreshing drink using alfalfa as a starting material.

(57) A refreshing drink using alfalfa as a starting material, which is obtained by dissolving the powder in water, suitably diluting a concentrated solution obtained by filtering the alfalfa powder-containing water, and adding glucose, honey, spices and the like thereto. The refreshing drink is rich in nutrient substances and can be easily intaken by men and women of all ages, making itself as a so-called dietary drink.

EP 0 220 353 A1

## REFRESHING DRINK USING ALFALFA AS A STARTING MATERIAL

### Background of the Invention

The present invention relates to a novel refreshing drink using, as a starting material, alfalfa which is a leguminous plant having high nutrient values.

Nowadays, refreshing beverages of quite a many kinds have been placed in the market, most of them being produced to offer simply good tastes and containing sugars in very large amounts as well as numerous additives, creating a so-called foodstuff hazard.

The inventor has forwarded the study to produce a refreshing drink which does not cause the foodstuff hazard and which is capable of supplementing nutrient substances that are liable to be in short supply in our daily diet, while satisfying a person of dry throat. The inventor has given attention to alfalfa (lucerne, Murasaki Umagoyashi in Japanese) which is a plant of omnipotence having more than fifty nutrient elements inclusive of minerals, developed a process for producing a refreshing drink from an extract thereof, and has accomplished the present invention.

### Summary of the Invention

The object of the present invention is to provide a novel refreshing drink which is made from alfalfa as a starting material that does not cause foodstuff hazard, the refreshing drink being rich in nutrience, being suited to be easily intaken by men and women of all ages and just serving as a so-called dietary beverage.

### Detailed Description of the Invention

The present invention is concerned with a refreshing drink made from alfalfa as a starting material, which is obtained by dissolving a powder of alfalfa in water, concentrating the solution by filtration, suitably diluting the concentrated solution, and adding glucose, honey and spices thereto.

Alfalfa is a leguminous plant which was originally produced in central Asian countries, but is now cultivated in the whole world. Called Murasaki Umagoyashi in Japanese, the alfalfa has been used in large amounts as feed for oxen and horses in every country in the world. The alfalfa grows well on the alkaline soil. When grown up, it reaches 50 to 60 cm in height and roots grow about two meters under the soil. Leaves and stalks of the alfalfa are rich in various components compared with other plants. Because of this reason, the alfalfa has long been drawing attention as a pasture best suited for improving physical constitution of oxen and horses, and has been widely used. Components contained in the alfalfa include proteins, vitamines A, B6, E, D, K, U, ashes, phosphorus, calcium, potassium, sodium, magnesium, iron, and the like.

The refreshing drink according to the present invention is produced as described below.

(1) The alfalfa which has grown to about 50 cm at the time of flowering is reaped in, washed with water, and is dried quickly.

(2) After the drying, the leaves only are collected using a special machine resembling a threshing machine.

(3) The leaves collected are pulverised into the powdery form.

(4) The powder is dissolved in water, and a solution obtained by the dripping system through filtration using a special filter is concentrated to a predetermined concentration and is canned.

(5) The concentrated solution (mother liquor) is diluted, for example, into a volume of about ten times as much, or is suitably admixed with fructose, glucose, honey, acidity agent, spices, L-ascorbic acid, and like, and is bottled or canned.

As described above, the present invention provides an ideal refreshing drink which is made from nutrient alfalfa as a starting material, which gives taste that had not existed so far, and which replenishes a variety of nitrient substances necessary for human body while satisfying a person of dry throat.

### Claims

1. A refreshing drink using alfalfa as a starting material, which is obtained by dissolving the powder of alfalfa in water, suitably diluting a concentrated solution obtained by filtering the alfalfa powder-containing water, and adding glucase, honey, spices and the like thereto.

2. A refreshing drink using alfalfa as a starting material according to claim 1, wherein the concentrated solution is diluted into ten folds.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | no relevant documents have been enclosed<br><br>- - - - - | | A 23 L    2/02<br>A 23 L    2/38 |

TECHNICAL FIELDS
SEARCHED (Int. Cl.4)

A 23 L    2/00

The present search report has been drawn up for all claims

| Place of search<br>BERLIN | Date of completion of the search<br>03-06-1986 | Examiner<br>SCHULTZE D |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82